# EUROPEAN PATENT SPECIFICATION

(11) **EP 1 326 489 B1**
(45) Date of publication and mention of the grant of the patent: **15.12.2004**
(21) Application number: 01961564.0
(22) Date of filing: 03.09.2001
(51) Int. Cl.: A01B 15/16, A01B 23/06

(54) **DISC**
DISK
DISQUE

(30) Priority: 04.09.2000 SE 0003130
(43) Date of publication of application: 16.07.2003
(73) Proprietor: Väderstad-Verken AB, 590 21 Väderstad (SE)
(72) Inventor: STARK, Crister, S-590 21 VÄDERSTAD (SE)
(74) Representative: Stein, Jan Anders Lennart
(86) International application number: PCT/SE2001/001862
(87) International publication number: WO 2002/019791

(56) References cited:
- FR-A- 1 187 337
- US-A- 630 053
- US-A- 1 042 651
- US-A- 1 077 288
- US-A- 1 663 239
- US-A- 2 746 371

## Description

The present invention relates to a disc for an agricultural machine according to the precharacterising portion of claim 1. The invention also relates to an agricultural machine comprising at least one such disc. Such a disc is known from FR-A-1 187 337.

Discs are use in agricultural machines or cultivating and preparing the ground before goods such as seed and fertilizer are guided down into the ground. The discs can also interact with sowing ploughshares which bear against the discs. The discs cut a furrow in the ground, into which the goods are guided down by means of the sowing ploughshare. A number of discs are preferably arranged in one or more rows on the agricultural machine.

In order to obtain satisfactory cultivation of the ground, the discs are preferably arranged freely rotatably on the agricultural machine. The discs will therefore rotate when the agricultural machine advances over the ground.

In a known embodiment, the discs are connected to a hub which is mounted on a spindle. One or more rolling bearings, such as ball bearings, are arranged between the hub and the spindle. During operation of the agricultural machine, great forces arise on the bearings and in the area of attachment of the discs to the hub. Particularly great forces arise if the disc strikes a hard object, such as a stone in the ground. The disc, the hub and the bearings must therefore be dimensioned in order to withstand these stresses.

As a large number of discs are often arranged on an agricultural machine, it is of interest to reduce the manufacturing costs of the discs and their interacting components, so that the overall manufacturing cost of the agricultural machine is reduced. At the same time, the strength of the discs must remain the same or be improved so as to withstand the abovementioned loads. It is also desirable to keep the weight of the discs the same or to reduce it, so that the total weight of the agricultural machine does not increase.

One object of the present invention is therefore to produce a disc for an agricultural machine, which disc is dimensioned to withstand the stresses which arise during its use.

Another object is to produce a disc which, together with its interacting components, has a low manufacturing cost.

This is achieved by a.disc of the type indicated in the introduction, including the features of the characterising portion of claim 1.

The design of the disc according to the present invention leads to a reduction in the stresses in the area where the disc is connected to the hub. The hub can thus be designed with a small diameter and a great axial extent. The small diameter and great axial extent of the hub also mean that races can be arranged directly in the surface of the hub and directly on the spindle on which the hub is mounted. The rolling bodies of the rolling bearing can thus be arranged directly between the surfaces of the hub and the spindle, as a result of which conventional rolling bearings, which form a unit together with annular races, can be eliminated. This reduces the number of components included in the agricultural machine, as a result of which the total manufacturing cost of the agricultural machine is reduced.

The invention will be described in greater detail below by means of illustrative embodiments shown in accompanying figures, where
- Fig. 1: shows a disc according to the prior art,
- Fig. 2: shows a first illustrative embodiment of a disc according to the present invention,
- Fig. 3: shows a section through the disc according to the first illustrative embodiment,
- Fig. 4: shows a second illustrative embodiment of a disc according to the present invention,
- Fig. 5: shows the disc according to the first illustrative embodiment in perspective, seen from a first side of the disc,
- Fig. 6: shows the disc according to the first illustrative embodiment in perspective, seen from a second side of the disc,
- Fig. 7: shows a third illustrative embodiment of a disc according to the present invention, and
- Fig. 8: shows a fourth illustrative embodiment of a disc according to the present invention.

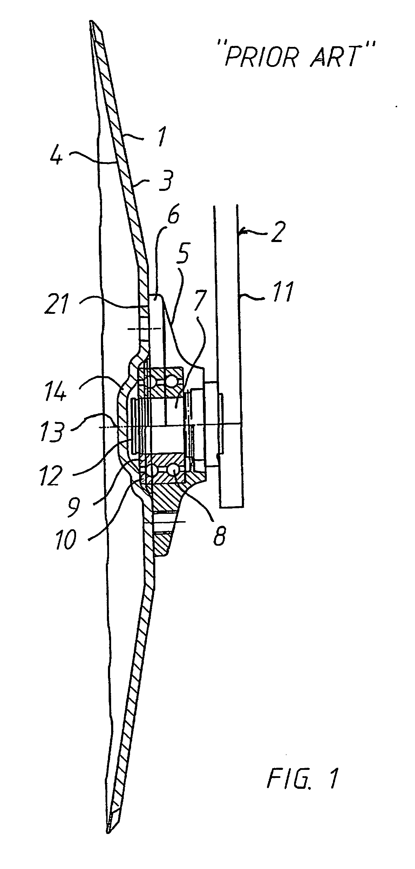

Fig. 1 shows a disc 1 for agricultural machines 2 according to the prior art. The disc 1 comprises a first side 3 and a second side 4, which first side 3 is designed to bear against a flange 6 formed on a hub 5. The disc 1 is connected to the hub 5, which is mounted on a spindle 7. A rolling bearing 8 is arranged between the hub 5 and the spindle 7. The rolling bearing 8 is of a conventional type which, together with annular races 9, 10, forms a unit. The bearing 8 leads to the disc 1 being freely rotatable on the spindle 7, so that the disc 1 will rotate when the agricultural machine 2 advances over the ground. The spindle 7 is arranged on an arm 11 of the agricultural machine 2, so that the disc 1 is positioned at a predetermined distance from the arm 11. In order to provide space for an end portion 12 of the spindle 7, the centre 13 of the disc 1 is provided with a protuberance 14. This known disc 1 has the disadvantages referred to in the introduction of the description.

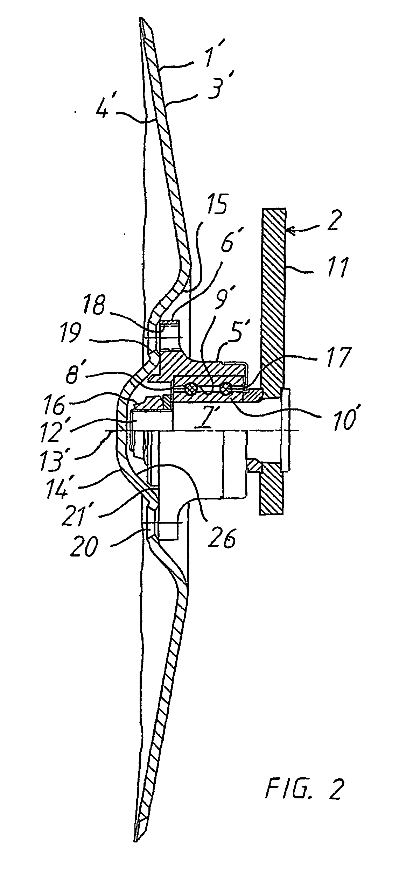

Fig. 2 shows a first illustrative embodiment of a disc 1' for agricultural machines 2 according to the present invention. The disc 1' comprises a first side 3' and a second side 4', which first side 3' is designed to bear against a flange 6' formed on a hub 5'. The first side 3' of the disc 1' comprises a recess 15 designed to at least partly accommodate the flange 6' of the hub 5' and to connect the disc 1' to the hub 5' therein. A race 9' is formed in the hub 5' for at least one rolling bearing 8'. There is therefore no need for a separate race against the hub 5', which is the case in conventional rolling bearings. (Hub is the term used for a construction with one or more races formed in it.) A separate annular race 10' is arranged on the spindle 7' on which the hub 5' is mounted. The race 10' is fixed on the spindle 7' by means of a nut 16 screwed on the spindle 7'. The spindle 7' is arranged on an arm 11 of the agricultural machine 2. A race can be designed directly in the spindle 7' instead of the annular race 10' arranged on the spindle 7'. Rolling bodies 17, such as balls, are arranged so as to roll in the races 9', 10'. By designing the hub 5' with a great axial extent in the direction of the spindle 7', a stable, play-free construction is obtained.

In the illustrative embodiment shown in Fig. 2, the flange 6' of the hub 5' is provided with threaded holes 18. Through-holes 19 are arranged in the recess 15 of the disc 1' for connecting the disc 1' to.the hub 5' by means of fastening elements 20, such as screws. The fastening elements 20 therefore extend through the disc 1' and are screwed firmly into the threaded holes 18 which are arranged in the flange 6' of the hub 5'.

If compared with the known disc 1 in Fig. 1, the disc 1' according to the illustrative embodiment in Fig. 2 is located at essentially the same distance from the arm 11 as the known disc 1 according to Fig. 1. One difference between the known disc 1 according to Fig. 1 and the disc 1' according to the illustrative embodiment in Fig. 2 is the surface 21' of the flange 6' of the hub 5', which surface faces and bears against the first side 3' of the disc 1'. According to the illustrative embodiment in Fig. 2, this surface 21' of the flange 6' is located at a greater distance from the arm 11 than the corresponding surface 21 of the flange 6 according to the known disc 1 in Fig. 1. In order to reduce the stresses which arise during use of the disc 1' according to the invention, the recess 15 in the disc 1' has therefore been designed so that said surface 21' of the flange 6' of the hub 5' is accommodated entirely within the recess 15' of the disc 1' and bears against the first side 3' of the disc 1' in the recess 15 of the disc 1'. The contact surface between the flange 6' of the hub 5' and the disc 1' therefore lies in the recess 15.

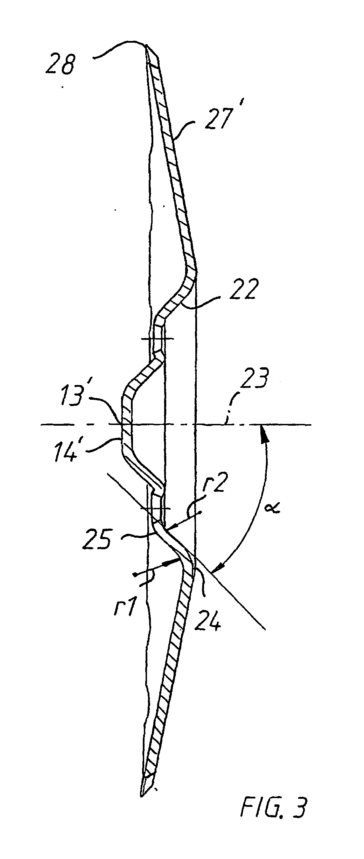

Fig. 3 shows a section through the disc 1' according to the first illustrative embodiment. The recess 15 comprises a radially outer wall portion 22 which runs all the way round and, in relation to the central axis 23 of the disc 1', is inclined at an angle α in the range 0°-70°, preferably in the range 0°-45°. In the illustrative embodiment shown, said angle α is roughly 41°. The radially outer wall portion 22 running all the way round of the recess 15 is formed by on the one hand a first curvature 24 with a.first radius r1 and on the other hand a second curvature 25 with a second radius r2. The first and second curvatures 24, 25 are located next to one another and that a tangent t at the transition between the first and second curvatures 24, 25 is inclined at the abovementioned angle α in relation to the central axis 23 of the disc 1'. It can also be seen from figures 2 and 3 how the centre 13' of the disc 1' is provided with a protuberance 14' which accommodates the end portion 12' of the spindle 7' and the nut 16 screwed onto the spindle 7'. The protuberance 14' is designed in the bottom 26 of the recess 15.

The disc 1' according to the invention comprises an essentially annular section 27' which is formed between the outer periphery 28 of the disc 1' and the recess 15. In the first illustrative embodiment shown in Figures 2 and 3, the essentially annular section 27' of the disc 1' constitutes the lateral area of a cone.

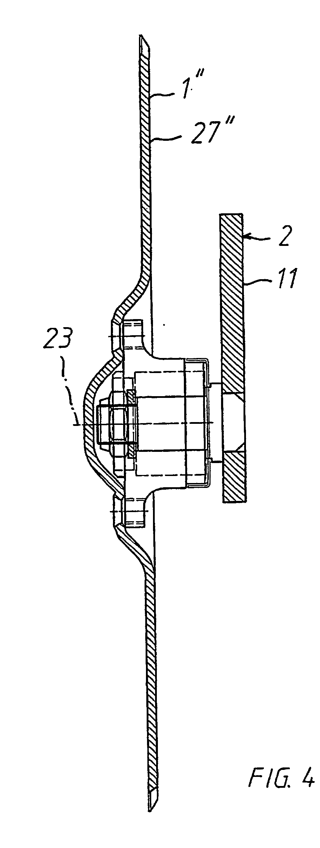

Fig. 4 shows a second illustrative embodiment of a disc 1'' according to the present invention. The disc according to this second illustrative embodiment differs from the first illustrative embodiment in that the essentially annular section 27" of the disc 1'' extends in a plane, the normal of which is essentially parallel to the central axis 23" of the disc 1''. According to another illustrative embodiment (not shown), it is also possible for the essentially annular section of the disc to be curved.

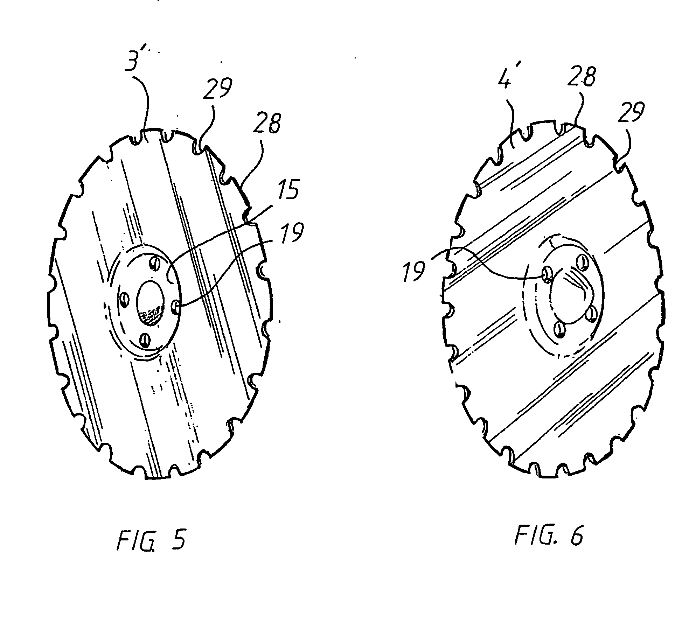

Fig. 5 shows the disc 1' according to the first illustrative embodiment in perspective, seen from a first side 3' of the disc 1', and Fig. 6 shows the disc 1' according to the first illustrative embodiment in perspective, seen from a second side 4' of the disc 1'. It can be seen clearly from Figures 5 and 6 that the recess 15 in the first side 3' of the disc 1' is provided with four through-holes 19 for fastening to the hub 5'. It can also be seen that the periphery 28 of the disc 1' is provided with cutouts 29 for forming teeth.

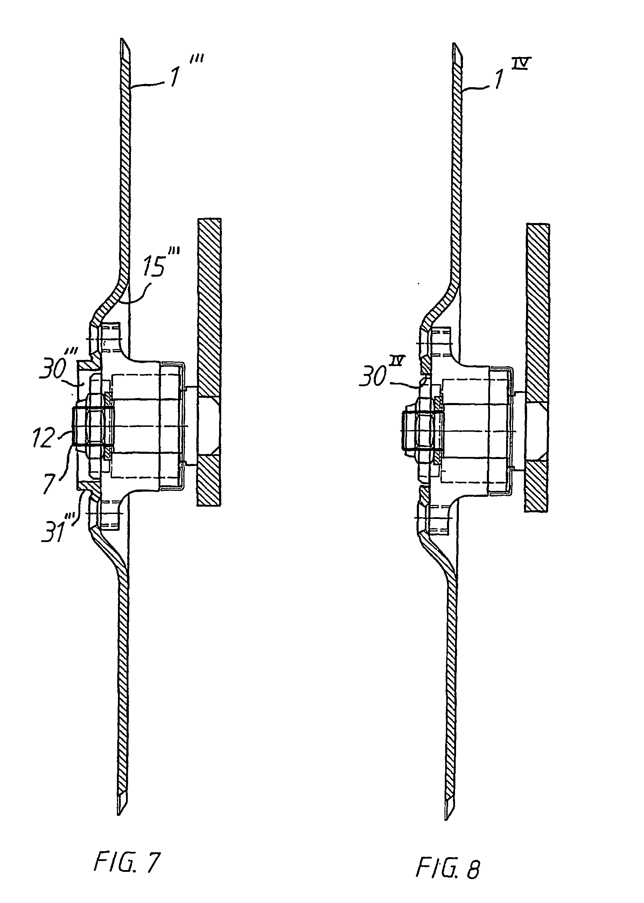

Fig. 7 shows a third illustrative embodiment of a disc 1''' according to the present invention. According to this illustrative embodiment, the disc 1''' comprises an opening 30''', which is positioned centrally in the recess 15''' of the disc 1'''. The end portion 12 of the spindle 7 extends through the opening 30'''. A collar 31''' running all the way round is arranged around the opening 30"'. According to a fourth illustrative embodiment of a disc 1^{IV} according to the present invention, which is shown in Fig. 8, it is also possible for the opening 30^{IV} to be provided without a collar 31''' running all the way round.

## Claims

1. Disc for an agricultural machine, comprising a first and a second side (3', 4'), which first side (3') is designed to bear against a hub (5'), the first side (3') of the disc (1'-1^{IV}) comprising a recess (15) designed to at least partly accommodate the hub (5') and to connect the disc (1'-1^{IV}) to the hub (5') therein, **characterized in that** a portion of the recess of the disc is provided with at least one through-hole (19) for connecting the disc (1'-1^{IV}) to the hub (5') by means of fastening elements (20), said portion being substantially perpendicular to the central axis (23) of the disc, said through-hole (19) being arranged in said portion in such a way that its central axis extends substantially parallel to the central axis (23) of the disc (1'-1^{IV}).

2. Disc according to Claim 1 or 2, wherein the recess (15) comprises a radially outer wall portion (22') which runs all the way round and, in relation to the central axis (23) of the disc (1'-1^{IV}), is inclined at an angle (α) in the range 0°-70°, preferably in the range 0°-45°.

3. Disc according to Claim 2, wherein the angle (α) which the wall portion (22) running all the way round of the recess (15) is inclined in relation to the central axis (23) of the disc (1'-1^{IV}) is roughly 41°.

4. Disc according to either one of Claims 2 or 3, wherein the wall portion (22) running all the way round of the recess (15) is formed by on the one hand a first curvature (24) with a first radius (r1) and on the other hand a second curvature (25) with a second radius (r2), and in that a tangent (t) at the transition between the first and second curvatures (24, 25) is inclined at said angle (α) in relation to the central axis (23) of the disc (1'-1^{IV}).

5. Disc according to any one of Claims 2-4, including an essentially annular section (27', 27") of the disc (1'-1^{IV}), which is formed between the outer periphery (28) of the disc (1'-1^{IV}) and the recess (15).

6. Disc according to Claim 5, wherein the essentially annular section (27") of the disc (1") extends in a plane, the normal of which is essentially parallel to the central axis (23) of the disc (1").

7. Disc according to Claim 5, wherein the essentially annular section of the disc is curved.

8. Disc according to Claim 5, wherein the essentially annular section (27') of the disc (1') constitutes the lateral area of a cone.

9. Disc according to any one of the preceding claims, wherein a race (9') is formed in the hub (5') for at least one rolling bearing (8').

10. Agricultural machine, comprising at least one disc according to any one of the preceding Claims, wherein the disc (1'-1^{IV}) is connected to said hub (5'), in that the hub (5') is mounted on a spindle (7') arranged in the agricultural machine (2), and in that races (9', 10') for at least one rolling bearing (8') are formed on the hub (5') and, respectively, the spindle (7').

## Patentansprüche

1. Scheibe für eine landwirtschaftliche Maschine, wobei
- die Scheibe eine erste und eine zweite Seite (3', 4') hat,
- die erste Seite (3') so ausgelegt ist, dass sie an einer Nabe (5') anliegt, und
- die erste Seite (3') der Scheibe (1' bis 1^{IV}) eine Aussparung (15) aufweist, die so ausgelegt ist, dass sie wenigstens teilweise die Nabe (5') aufnimmt und die Scheibe (1' bis 1^{IV}) mit der Nabe (5') in ihr verbindet,
**dadurch gekennzeichnet,**
- **dass** ein Teil der Aussparung der Scheibe mit wenigstens einem Durchgangsloch (19) zum Verbinden der Scheibe (1' bis 1^{IV}) mit der Nabe (5') mittels Befestigungselementen (20) versehen ist,
- **dass** der Teil im wesentlichen senkrecht zur zentralen Achse (23) der Scheibe ist und
- **dass** das Durchgangsloch (19) in dem Teil so angeordnet ist, dass sich seine zentrale Achse im wesentlichen parallel zur zentralen Achse (23) der Scheibe (1' bis 1^{IV}) erstreckt.

2. Scheibe nach Anspruch 1 oder 2, bei welcher die Aussparung (15) einen radial äußeren Wandabschnitt (22') aufweist, der sich ganz herum erstreckt und bezogen auf die zentrale Achse (23) der Scheibe (1' bis 1^{IV}) in einem Winkel (α) in dem Bereich von 0° bis 70°, vorzugsweise in dem Bereich von 0° bis 45°, geneigt ist.

3. Scheibe nach Anspruch 2, bei welcher der Winkel (α), mit dem der sich ganz um die Aussparung (15) herum erstreckende Wandabschnitt (22) bezogen auf die zentrale Achse (23) der Scheibe (1' bis 1^{IV}) geneigt ist, etwa 41° beträgt.

4. Scheibe nach Anspruch 2 oder 3, bei welcher der Wandabschnitt (22), der sich ganz um die Aussparung (15) herum erstreckt, einerseits von einer ersten Krümmung (24) mit einem ersten Radius (r1) und andererseits von einer zweiten Krümmung (25) mit einem zweiten Radius (r2) gebildet wird und dass eine Tangente (t) an den Übergang zwischen der ersten und der zweiten Krümmung (24, 25) mit dem Winkel (α) bezogen auf die zentrale Achse (23) der Scheibe (1' bis 1^{IV}) geneigt ist.

5. Scheibe nach einem der Ansprüche 2 bis 4 mit einem im wesentlichen ringförmigen Abschnitt (27', 27") der Scheibe (1' bis 1^{IV}), der zwischen dem Außenumfang (28) der Scheibe (1' bis 1^{IV}) und der Aussparung (15) ausgebildet ist.

6. Scheibe nach Anspruch 5, bei welcher der im wesentlichen ringförmige Abschnitt (27") der Scheibe (1") sich in einer Ebene erstreckt, deren Senkrechte im wesentlichen parallel zur zentralen Achse (23) der Scheibe (1") ist.

7. Scheibe nach Anspruch 5, bei welcher der im wesentlichen ringförmige Abschnitt der Scheibe gekrümmt ist.

8. Scheibe nach Anspruch 5, bei welcher der im wesentlichen ringförmige Abschnitt (27') der Scheibe (1') die Seitenfläche eines Konus bildet.

9. Scheibe nach einem der vorhergehenden Ansprüche, bei welcher in der Nabe (5) ein Laufring (9') für wenigstens ein Rollenlager (8') ausgebildet ist.

10. Landwirtschaftliche Maschine mit wenigstens einer Scheibe nach einem der vorhergehenden Ansprüche, bei welcher die Scheibe (1' bis 1^{IV}) mit der Nabe (5') verbunden ist, die Nabe (5') an einer Welle (7') sitzt, die in der landwirtschaftlichen Maschine (2) angeordnet ist, und die Laufringe (9', 10') für wenigstens ein Rollenlager (8') an der Nabe (5') bzw. der Welle (7') ausgebildet sind.

## Revendications

1. Disque pour machine agricole, comprenant un premier et un deuxième côté (3', 4'), lequel premier côté (3') est conçu pour porter sur un moyeu (5'), le premier côté (3') du disque (1'-1^{IV}) comprenant un évidement (15) conçu pour recevoir au moins en partie le moyeu (5') et pour connecter le disque (1'-1^{IV}) au moyeu (5'), **caractérisé en ce qu'**une partie de l'évidement du disque est munie d'au moins un trou traversant (19) pour connecter le disque (1'-1^{IV}) au moyeu (5') au moyen d'éléments de fixation (20), ladite partie étant sensiblement perpendiculaire à l'axe central (23) du disque, ledit trou traversant (19) étant formé dans ladite partie de telle manière que son axe central s'étend sensiblement parallèlement à l'axe central (23) du disque (1'-1^{IV}).

2. Disque selon la revendication 1, dans lequel l'évidement (15) comprend une partie de paroi radialement extérieure (22') qui fait tout le tour et, par rapport à l'axe central (23) du disque (1'-1^{IV}), est inclinée selon un angle (α) compris dans l'intervalle 0°-70°, de préférence dans l'intervalle 0°-45°.

3. Disque selon la revendication 2, dans lequel l'angle (α) que forme la partie de paroi (22) qui fait tout le tour de l'évidement (15) par rapport à l'axe central (23) du disque (1'-1^{IV}) vaut à peu près 41°.

4. Disque selon l'une quelconque des revendications 2 et 3, dans lequel la partie de paroi (22) qui fait tout le tour de l'évidement (15) est formée d'une part par une première courbure (24) ayant un premier rayon (r1) et d'autre part une deuxième courbure (25) ayant un deuxième rayon (r2), et en ce qu'une tangente (t) à la transition entre les première et deuxième courbures (24, 25) est inclinée selon ledit angle (α) par rapport à l'axe central (23) du disque (1'-1^{IV}).

5. Disque selon l'une quelconque des revendications 2 à 4, comprenant une section essentiellement angulaire (27', 27") du disque (1'-1^{IV}), qui est formée entre la périphérie extérieure (28) du disque (1'-1^{IV}) et l'évidement (15).

6. Disque selon la revendication 5, dans lequel la section essentiellement annulaire (27") du disque (1") s'étend dans un plan, dont la normale est essentiellement parallèle à l'axe central (23) du disque (1").

7. Disque selon la revendication 5, dans lequel la section essentiellement annulaire du disque est courbée.

8. Disque selon la revendication 5, dans lequel la section essentiellement annulaire (27') du disque (1') constitue l'aire latérale d'un cône.

9. Disque selon l'une quelconque des revendications précédentes, dans lequel un chemin de roulement (9') est formé dans le moyeu (5') pour au moins un roulement (8').

10. Machine agricole, comprenant au moins un disque conforme à l'une quelconque des revendications précédentes, dans laquelle le disque (1'-1^{IV}) est connecté audit moyeu (5'), le moyeu (5') est monté sur une broche (7') placée dans la machine agricole (2), et des chemins de roulement (9', 10') pour au moins un roulement (8') sont formés sur le moyeu (5') et, respectivement, la broche (7').
